**Europäisches Patentamt**

**European Patent Office**

**Office européen des brevets**

(19)

(11) Numéro de publication: **0 088 730
B1**

(12)

# FASCICULE DE BREVET EUROPEEN

(45) Date de publication du fascicule du brevet:
**10.12.86**

(21) Numéro de dépôt: **83810088.1**

(22) Date de dépôt: **04.03.83**

(51) Int. Cl.⁴: **B 65 D 77/20**

(54) **Feuille de couverture scellée sur des contenants par soudure pour constituer un couvercle détachable.**

(30) Priorité: **05.03.82 CH 1339/82**

(43) Date de publication de la demande:
**14.09.83 Bulletin 83/37**

(45) Mention de la délivrance du brevet:
**10.12.86 Bulletin 86/50**

(84) Etats contractants désignés:
**AT BE CH DE FR GB IT LI LU NL SE**

(56) Documents cités:
**DE - A - 2 209 393
DE - A - 2 740 922
FR - A - 1 478 293
FR - A - 2 172 729
GB - A - 1 005 141
US - A - 337 023
US - A - 3 194 479
US - A - 4 258 529**

(73) Titulaire: **C O D Inter Techniques SA, 16, rue Albert Gos,
CH-1206 Genève (CH)**

(72) Inventeur: **Horvath, Laszlo Sandor, 51, route de
Frontenex, CH-1207 Genève (CH)**

(74) Mandataire: **Vuille, Roman et al, c/o KIRKER & Cie
S.A. 14, rue du Mont-Blanc Case Postale 872,
CH-1211 Genève 1 (CH)**

ACTORUM AG

## Description

L'invention concerne une feuille de couverture scellée sur des contenants ou récipients par soudure pour constituer un couvercle détachable, se composant d'un film externe de faible élasticité soudé à un film interne thermoplastique par l'intermédiaire d'une couche adhésive thermoplastique.

Le document DE-A-2 209 393 décrit une feuille de couverture scellée sur des contenants ou récipients selon une ligne de soudure, pour constituer un couvercle détachable sous l'effet de la traction, se composant d'un film externe de faible élasticité soudé à un film interne selon une bande de soudure, par l'intermédiaire d'une couche adhésive thermoplastique, et dans laquelle le film externe et la couche adhésive sont incisés selon une ligne de rupture préétablie. L'invention est caractérisée en ce que le film interne est fait d'une matière thermoplastique, en ce que la bande de soudure du film interne est mécaniquement affaiblie par la perte de l'orientation des molécules constituant le fim interne et par l'amincissement dudit film dû au soudage, et en ce que la déchirure du film interne s'effectue selon une ligne située dans la bande de soudure, dont le tracé coïncide ou non avec le tracé de la ligne de rupture préétablie.

L'objet de l'invention décrite ci-dessous est une feuille de couverture composite permettant de sceller une grande variété de contenants destinés à recevoir des produits alimentaires, à empêcher l'oxydation, la corrosion ou la perte des contenus, et pour d'autres applications où il est très important que la fermeture soit hermétique, mais où l'enlèvement du couvercle doit être facile.

L'expérience a montré qu'il faut satisfaire à deux exigences contradictoires lorsque l'on utilise des feuilles de couverture pour sceller hermétiquement des contenants: d'une part, le contenant doit être hermétiquement scellé même lorsque des gouttes du produit conditionné tombent sur la surface de soudure pendant le remplissage, d'autre part l'utilisateur doit pouvoir enlever la feuille de couverture pour ouvrir le récipient. Lorsque la soudure est faite à température et à pression élevées, une fraction du produit peut se trouver expulsée. Si l'étanchéité dans ces conditions est bonne, le décollement du couvercle n'est pas facile, ce qui rend l'ouverture du récipient par l'utilisateur malaisée. Cette situation existe souvent avec les pots de yaourt courants.

A l'inverse, lorsque la soudure est faite en ajustant les conditions opératoires de manière à rendre le décollage du couvercle très facile, le produit peut être expulsé du récipient en cours de manutention, et son conditionnement est défectueux.

Le document DE-A-2 209 393 propose une solution technique susceptible de réaliser l'étanchéité recherchée à l'aide d'une feuille de couverture déchirable. Cette solution a le désavantage de se limiter à l'emploi de films métalliques préincisés imprégnés d'un matériau thermofusible et dont l'étanchéité ne peut être garantie que par une soudure pratiquée sur une surface relativement étendue. De plus l'arrachage, par traction, est source de problèmes et la déchirure de la feuille de couverture s'effectue rarement dans des conditions satisfaisantes.

L'invention décrite ci-dessous est destinée à concilier les deux exigences contradictoires que sont la nécessité de sceller hermétiquement le contenant et celle de pouvoir l'ouvrir facilement.

Cet objectif est atteint en fournissant des solutions différentes à chacune des exigences contradictoires: bonne étanchéité et facilité d'ouverture. Le couvercle adhère au contenant par une véritable soudure, et l'ouverture est rendue aisée grâce à la présence d'une ligne de rupture préétablie située à l'intérieur de la zone délimitée par la ligne de soudure au contenant. Le principe de base de cette invention n'est en aucune manière dépendant des caractéristiques géométriques du contenant ou récipient à sceller.

La Fig. 1 est une vue transversale selon 1–1 de la feuille de couverture selon la présente invention de la Fig. 2, cette Fig. 2 illustrant le principe de la mise en œuvre de cette feuille de couverture.

La Fig. 3 est une vue transversale selon 3–3 de la feuille de couverture selon la présente invention représentée sur la Fig. 2.

La Fig. 4 montre un autre tracé possible de la ligne de rupture.

La Fig. 5 est une vue transversale selon 5–5 de la feuille de couverture selon l'invention de la Fig. 4.

La Fig. 6 est une autre tracé possible de la ligne de rupture.

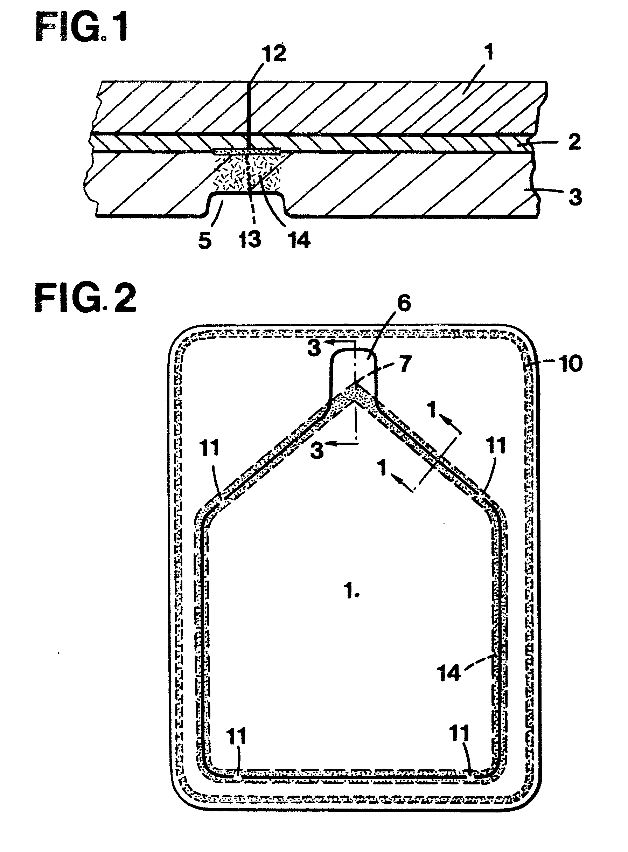

Le film externe (1) est constitué d'un matériau de faible élasticité comme l'aluminium, le papier, certains plastiques, ou d'autres matériaux de faible élasticité. Le film (1) comporte une couche fine de matière adhésive de même composition que le matériau thermoplastique constituant le film interne (3). Dans une opération préalable, une incision est faite dans le film (1) et dans la couche adhésive (2), son tracé constitue la ligne de rupture préétablie suivant laquelle le couvercle se déchirera lors de l'ouverture. Les variantes possibles de ces tracés, dont l'un est représenté sur la Fig. 2, sont pratiquement infinies.

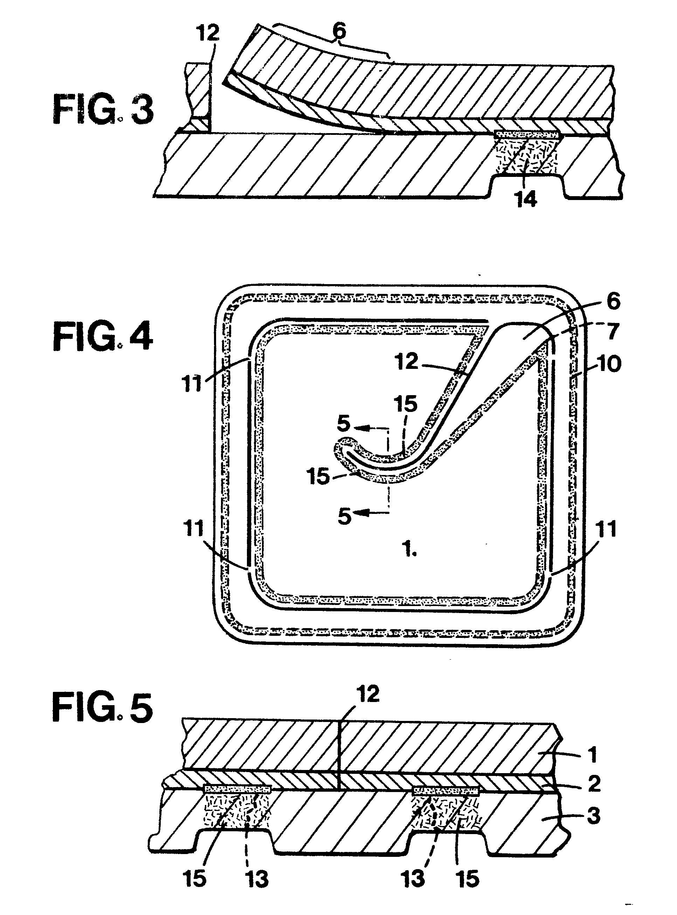

Après que l'incision a été effectuée, le film (1) est soudé au film (3) par l'intermédiaire de la couche adhésive (2). La ligne de soudure (14) représentée par la zone pointillée dans les Figs. 1, 2 et 3, et correspondant au creux (5) des coupes transversales des Figs. 1 et 3, se superpose avec la ligne de rupture préétablie (12) sur pratiquement toute la longueur, à l'exception de la languette d'ouverture (6). La déchirure du couvercle s'effectue à partir du point (7). Dans la région de la languette d'ouverture (6), le tracé de l'incision ne se superpose pas à la ligne de déchirure, et la languette d'ouverture n'est pas soudée au film (3). Le film (3) peut aussi être un film thermoplastique composite à plusieurs couches. Comme c'est le cas dans la majorité des films fabriqués par extrusion soufflage, le film (3) possède une orientation moléculaire biaxiale. Pendant le soudage, la matière thermoplastique est fondue, ce qui détruit en grande partie l'orientation moléculaire à laquelle le film doit pour l'essentiel sa résistance à la rupture.

Cette zone de résistance réduite est représentée sur les Figs. 1 et 3 par la zone pointillée (14). La ligne de soudure est encore affaiblie par le creux formé sous l'effet de la pression exercée lors du soudage. Des entailles produites par exemple par des arêtes ou par d'autres motifs de l'outil de soudage peuvent contribuer à augmenter encore la faiblesse de la ligne de soudure.

La ligne (10) des Figs. 2 et 4 représente la ligne de soudure suivant laquelle la feuille de couverture est soudée au contenant (non représenté).

La ligne de rupture préétablie (12) est interrompue à des intervalles convenables par de petits ponts (11). Ces ponts (11) évitent que ne se détache la portion de film qu'entoure la ligne de rupture (12). Toutes les fois que cela sera techniquement possible, les ponts (11) pourront être omis.

La feuille de couverture est arrachée en tirant sur la languette d'ouverture (6) avec les doigts. La déchirure débute au point (7) et suit ensuite la ligne de rupture préétablie (12) jusqu'à ce que toute la portion de feuille entourée par la ligne de rupture préétablie (12) soit enlevée. Durant cette opération, le film thermoplastique est déchiré le long de la ligne de soudure (5) selon (13).

Dans une autre forme d'exécution, la soudure peut être effectuée comme cela est indiqué sur la Fig. 4, où le film (3) est soudé au film (1) par l'intermédiaire de la couche adhésive (2) suivant une ligne de soudure (15), la ligne de rupture préétablie (12) ne coïncidant pas avec la ligne de soudure.

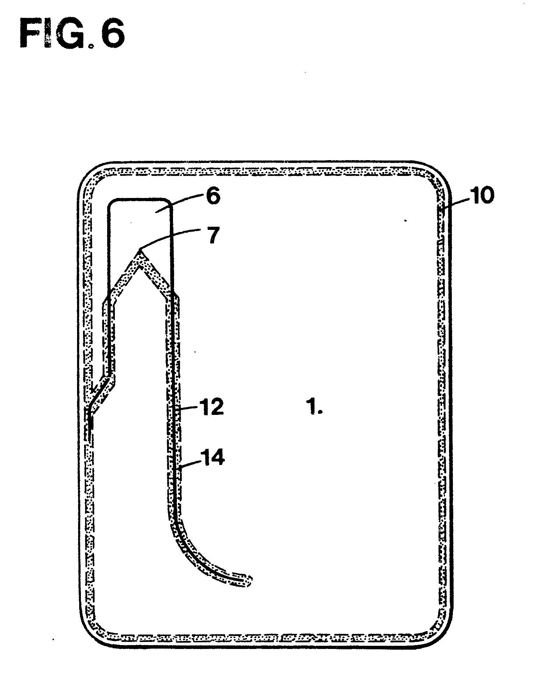

La Fig. 6 est une représentation de la feuille de couverture selon l'invention dans laquelle la ligne de rupture préétablie (12) est disposée de façon à se superposer, tout au moins en partie, à la ligne de soudure (10) assurant l'étanchéité de la fermeture du récipient à l'aide de la feuille de couverture. Dans un tel cas, l'ouverture initiée en (7) et débutant selon (12) se poursuit selon la ligne de soudure (10). Cette disposition particulière permet de libérer dans sa totalité la surface supérieure du récipient.

L'invention permet de bien séparer les deux opérations que sont la fermeture tout à fait hermétique du récipient en matière thermoplastique et son ouverture facile. Le récipient est fermé au moyen d'une soudure véritable, et il est ouvert en déchirant le couvercle suivant le tracé de la ligne de soudure des films qui constituent la feuille de couverture, et de l'incision faite dans le film externe de faible élasticité de la feuille de couverture avant le soudage de celle-ci sur le récipient.

**Revendications**

1. Feuille de couverture scellée sur des contenants ou récipients selon une ligne de soudure (10) pour constituer un couvercle détachable sous l'effet de la traction, se composant d'un film externe (1) de faible élasticité soudé à un film interne (3) selon une bande de soudure (14, 15), par l'intermédiaire d'une couche adhésive thermoplastique (2), et dans laquelle le film (1) et la couche adhésive (2) sont incisés selon une ligne de rupture préétablie (12), caractérisée en ce que le film interne est fait d'une matière thermoplastique, en ce que la bande de soudure (14, 15) du film interne (3) est mécaniquement affaiblie par la perte de l'orientation des molécules constituant le film interne (3) et par l'amincissement (5) dudit film (3) dû au soudage, et en ce que la déchirure du film interne (3) s'effectue selon une ligne (13) située dans la bande de soudure (14, 15), dont le tracé coïncide ou non avec le tracé de la ligne de rupture préétablie (12).

2. Feuille de couverture selon la revendication 1, caractérisée en ce que le tracé de la bande de soudure (14) coïncide en partie avec le tracé de la ligne de rupture préétablie (12).

3. Feuille de couverture selon la revendication 1, caractérisée en ce que le tracé de la bande de soudure (15) est décalé par rapport à la ligne de rupture préétablie (12).

4. Feuille de couverture selon l'une des revendications 1 à 3, caractérisée en ce que le tracé de la ligne de rupture préétablie (12) coïncide en partie avec le tracé de la ligne de soudure (10) scellant ladite feuille au récipient ou contenant.

**Claims**

1. Cover sheet sealed on containers along a weld line (10) for providing a cover removable under pulling constituted by an external film (1) of poor elasticity welded to an internal film (3) along a welding stripe (14, 15) with the help of a thermoplastic adhesive layer (2), and in which the film (1) and the adhesive layer (2) present an incision along a predetermined frangible line (12), characterized by the fact that the internal film is made of thermoplastic material, that the welding stripe (14, 15) of the internal film (3) is mecanically weakened due to the loss of orientation of the molecules constituting the internal film (3) and due to thinning (5) of the said film (3) by welding, and that the tear of the internal film (3) follows a line (13) in the welding stripe (14, 15), whose track is coincident or not with the track of the predetermined frangible line (12).

2. Coversheet of claim 1, characterized by the fact that the track of the welding stripe (14) is partly coincident with the track of the predetermined frangible line (12).

3. Coversheet of claim 1, characterized by the fact that the track of the welding stripe (15) is set off with regards to the predetermined frangible line (12).

4. Coversheet of one of the claims 1 to 3, characterized by the fact that the track of the predetermined frangible line (12) is partly coincident with the track of the weld line (10) sealing the said sheet to the container.

**Patentansprüche**

1. Deckblatt, welches entlang einer Schweissnaht (10) auf Behältern versiegelt ist, um einen unter Zug lösbaren Deckel zu bilden, welches eine schwach elastische, entlang einem Schweissstreifen (14, 15) mittels einer thermoplastischen Klebschicht (2) an eine innere Folie (3) geschweisste äussere Folie (1) aufweist und in welchem die Folie (1) und die Klebschicht (2) entlang einer vorbestimmten Brechlinie (12) eingeschnitten sind, dadurch gekennzeichnet, dass die innere Folie aus thermoplastischem Material besteht, dass der Schweissstreifen (14, 15) der inneren Folie (3) durch den Verlust der Ausrichtung der die innere Folie bildenden Molekülen und infolge der wegen des Schweissens dünner gewordenen Folie (3) mechanisch geschwächt ist, und dass der Reissrand der inneren Folie (3) sich entlang einer im Schweissstreifen (14, 15) gelegenen Linie bildet, deren Verlauf mit dem Verlauf der vorbestimmten Brechlinie (12) übereinstimmt oder nicht übereinstimmt.

2. Deckblatt gemäss Anspruch 1, dadurch gekennzeichnet, dass der Verlauf des Schweissstreifens (14) teilweise mit dem Verlauf der vorbestimmten Brechlinie (12) übereinstimmt.

3. Deckblatt gemäss Anspruch 1, dadurch gekennzeichnet, dass der Verlauf des Schweissstreifens (15) gegenüber der vorbestimmten Brechlinie (12) verschoben ist.

4. Deckblatt gemäss einem der Ansprüche 1 bis 3, dadurch gekennzeichnet, dass der Verlauf der vorbestimmten Brechlinie (12) teilweise mit dem Verlauf der Schweisslinie (10) übereinstimmt, welche das Blatt auf den Behälter versiegelt.

# FIG.1

# FIG.2

**FIG. 3**

12
6
14

**FIG. 4**

6
7
12
10
11
15
5
15
15
5
11
11
1.

**FIG. 5**

12
1
2
3
15   13   13   15

# FIG.6